(19)

Europäisches
Patentamt
European
Patent Office
Office européen
des brevets

(11) **EP 2 107 411 A2**

(12) **EUROPEAN PATENT APPLICATION**

(43) Date of publication:
**07.10.2009 Bulletin 2009/41**

(51) Int Cl.:
***G02B 26/10*** *(2006.01)*

(21) Application number: **09156601.8**

(22) Date of filing: **30.03.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **04.04.2008 KR 20080031713**

(71) Applicant: **Samsung Electronics Co., Ltd.**
**Suwon-si,**
**Gyeonggi-do 442-742 (KR)**

(72) Inventors:
• **Choi, Jong-chul**
 **Gyeonggi-do (KR)**
• **Choi, Woo-seok**
 **Seoul (KR)**

(74) Representative: **Fearnside, Andrew Simon et al**
 **Appleyard Lees**
 **15 Clare Road**
 **Halifax, HX1 2HY (GB)**

(54) **Light scanning unit, image forming apparatus employing the same and light scanning methods**

(57) A light scanning unit (100) including a light source unit (100) for emitting a collimated light beam, and a beam deflector (170) for deflecting and scanning the collimated light beam and having a mirror surface controllable to oscillate, a light scanning method and an image forming apparatus employing the light scanning unit are disclosed. The light source unit may be made to oscillate synchronously with the oscillation of the beam deflector so that the incident angle of the collimated light beam on the beam deflector changes in synchronization with the oscillation of the beam deflector, thereby allowing an increase of the maximum deflection angle of the light beam deflected and scanned by the beam deflector.

FIG. 1

EP 2 107 411 A2

**Description**

CROSS-REFERENCE TO RELATED PATENT APPLICATION

This application claims the benefit of Korean Patent Application No. 10-2008-0031713, filed on April 4, 2008, in the Korean Intellectual Property Office, the disclosure of which is incorporated herein in its entirety by reference.

The present invention relates to a light scanning unit, a light scanning methods, and an image forming apparatus employing the same, and more particularly, though not exclusively, to a light scanning unit using, for example, a torsion oscillator e.g. including a mirror surface, as a light deflector, creating sinusoidal oscillation, an image forming apparatus employing the same, and a light scanning method used by the apparatus.

A light scanning unit may be an optical device that scans light emitted from a light source onto an exposed surface. A light scanning unit may be used in an image forming apparatus, such as a duplicator, a printer, a facsimile, or the like, that utilizes electro-photography to realize an image on a printing paper.

Recently, due to certain limitations of the traditionally used polygon mirror, e.g., noise and its velocity in response to fast-scanning, a light scanning unit employing a torsion oscillator (e.g., a micro-electromechanical systems (MEMS) mirror) creating sinusoidal oscillation has been introduced. The torsion oscillator may offer lower noise and faster response over the traditional polygon mirror. However, due to limitations in driving the torsion oscillator, it may be difficult to enlarge the deflection angle. In the case of a polygon mirror, the maximum deflection angle may be about 45 degrees. However, the maximum oscillating angle of the torsion oscillator is typically much smaller than about 45 degrees. Moreover, the small oscillating angle of the torsion oscillator may result in, for example, non-uniformity in the sizes of spots due to a difference in F/# between the center and edge of the exposed surface. In particular, in order to scan light at equal intervals onto the exposed surface with respect to a scanning ray having a sinusoidal trajectory, an inverse compensation optical lens creating arc-sinusoidal ray shape may be required. In this regard, the design the inverse compensation optical lens may become easier with the increase in the oscillating angle of the torsion oscillator. However, it is difficult to increase the oscillating angle of the torsion oscillator due to the instrumental limit of the torsion oscillator. In a first of its aspects, the invention provides a light scanning unit capable of deflecting a light beam at a deflection angle greater than an oscillating angle of a torsion oscillator. In a further aspect the invention provides an image forming apparatus utilizing the light scanning unit of the invention in its first aspect. In a yet further aspect, the invention provides a light scanning method utilizing the light scanning unit of the invention in its first aspect.

According to a second aspect of the present invention, there is provided a light scanning unit including: a light source unit configured to emit a collimated light beam; and a beam deflector for deflecting the collimated light beam, the beam deflector may include a mirror surface that is configured to oscillate, the light source unit may be configured to cause (e.g. may be configured to oscillate so as to cause) the collimated light beam to be incident on the beam deflector with an incident angle that changes in synchronization with the oscillation of the mirror surface.

The light source unit may include a light source and a collimation lens for collimating a light beam received or receivable from the light source, the collimation lens may be configured to oscillate synchronously with the oscillation of the mirror surface.

The collimation lens may be arranged to oscillate in a direction substantially perpendicular to an optical path of the light beam when transmitted through the collimation lens.

The light source unit may include a light source, a collimation lens for collimating a light beam emitted or emittable from the light source and a holder integrally supporting both the light source and the collimation lens, the light source unit may be configured to oscillate synchronously with the oscillation of the mirror surface of the beam deflector.

The beam deflector may include a torsion oscillator including the mirror surface configured to oscillate to create a sinusoidal oscillation and a torsion support supporting the mirror surface.

The light scanning unit may further include an incident angle compensation lens for compensating an angle of travel path of the collimated light beam so that the collimated light beam may be directed toward the center of the mirror surface of the beam deflector.

The incident angle compensation lens may include at least two lenses.

The incident angle compensation lens may include a first part lens and a second part lens, the first part lens being arranged to have its focal point positioned at a field-generating origin of the light source unit, the second part lens being arranged to have its focal point positioned at the center of the mirror surface of the beam deflector.

A distance between the first part lens and the second part lens may be equal to or smaller than the sum of the focal lengths of the first and second part lenses.

The light scanning unit may further include a cylindrical lens for focusing the collimated light beam incident on the beam deflector in a sub-scanning direction perpendicular to a scanning direction along which a light beam deflected by the beam deflector is scanned.

The light scanning unit may further include an focusing optical element for focusing a light beam deflected by the beam deflector onto an exposed surface.

The focusing optical element may include a sinusoidal trajectory compensation lens for compensating for the light beam deflected by the beam deflector into a light beam having an arc-sinusoidal form so that the light beam deflected by the beam deflector is scanned to an exposed surface at equal intervals.

According to another aspect of the present invention, there is provided an image forming apparatus including: a light scanning unit and an exposed surface on which, in use, a light beam scanned by the light scanning unit is controllable to be incident, the light scanning unit may include: a light source unit configured to emit a collimated light beam and a beam deflector for deflecting the collimated light beam, the beam deflector may include a mirror surface that is configured to oscillate, the light source unit may be configured to oscillate so as to cause the collimated light beam to be incident on the beam deflector with an incident angle that changes in synchronization with the oscillation of the mirror surface.

The light scanning unit may include an incident angle compensation lens for compensating for an angle of travel path of the collimated light beam so that the collimated light beam is directed toward the center of the mirror surface of the beam deflector.

The image forming apparatus may further include a focusing optical element for focusing a light beam deflected by the beam deflector onto the exposed surface.

According to another aspect of the present invention, there is provided a light scanning method including: emitting a collimated light beam from a light source unit; and oscillating a beam deflector to scan the collimated light beam from the light source onto an exposed surface, the emitting of the collimated light beam may include oscillating a path of the collimated light beam from the light source in synchronization with the oscillation of the beam deflector so that an angle of travel path of the collimated light beam from the light source changes synchronously with the oscillation of the beam deflector.

The emitting of the collimated light beam may include compensating for the change of the angle of travel path of the collimated light beam so that the collimated light beam travels towards the center of the beam deflector.

The deflected light beam deflected by the beam deflector may have a sinusoidal trajectory.

The method may further include focusing the deflected light beam onto the exposed surface.

The focusing of the light beam may include compensating for the sinusoidal trajectory of the deflected light beam by applying an arc-sinusoidal shaping to the deflected light beam.

According to yet another aspect of the present invention, there is provided a light scanning unit that may include a light source unit configured to emit a collimated light beam and a beam deflector having a movable part configured to move to deflect the collimated light beam emitted by the light source unit across a scanning direction, the light source unit being configured to cause an emission angle of the collimated light beam emitted therefrom to vary in synchronization with the movement of the moveable part of the beam deflector.

At least a portion of the light source unit may be configured to move within a range of movement, the movable part of the beam deflector may comprise a reflecting mirror configured to oscillate within a range of oscillation to deflect the collimated light beam when incident thereupon over a range of deflection angles, the maximum value $\Theta_M$ of the range of deflection angles may satisfy the relationship: $\Theta_M = 2\theta_M + \varphi_2$, where $\theta_M$ represents an angle between the reflecting mirror at midpoint of the range of oscillation and the reflecting mirror at an/the upper limit of the range of oscillation, $\varphi_2$ representing the difference between a first angle of incidence at which the collimated light beam is controllable to be incident on the reflecting mirror when the at least a portion of the light source unit is at midpoint of the range of movement and a second angle of incidence at which the collimated light beam is controllable to be incident on the reflecting mirror when the at least a portion of the light source unit is at upper limit of the range of movement.

The light scanning unit may further include an incident angle compensation lens disposed between the light source and the beam deflector, the incident angle compensation lens including a first part lens and a second part lens, the first part lens being arranged to have its focal point positioned at a field-generating origin of the light source unit, the second part lens being arranged to have its focal point positioned at the center of the reflecting mirror of the beam deflector, the maximum value $\Theta_M$ of the range of deflection angles may satisfy the relationship: $\Theta_M = 2\theta_M + \varphi_1 \times F1/F2$, Where $\varphi_1$ represents a difference between a first emission angle of the collimated light beam when emitted from the light source when the at least a portion of the light source unit is at midpoint of the range of movement and a second emission angle of the collimated light beam when emitted from the light source when the at least a portion of the light source unit is at upper limit of the range of movement, F1/F2 representing a ratio of respective focal lengths of the first part lens and the second part lens.

The beam deflector may comprise a torsion oscillator that may include the reflecting mirror supported on a torsion support, the reflecting mirror being operable to deflect the collimated light beam when incident thereupon in a sinusoidal trajectory.

The light scanning unit may further include a focusing optical element including a sinusoidal trajectory compensation lens arranged to perform an arc-sinusoidal shaping of the collimated light beam deflected by the beam deflector to scan a light beam deflected by the beam deflector across the scanning direction at equal intervals.

According to the present invention, the light scanning unit, the image forming apparatus employing the light scanning unit and the light scanning method may have the following and/or other advantages.

First, the maximum deflection angle obtained by a beam deflector can be greater than the maximum oscillating angle of the beam deflector.

Second, by enlarging the maximum deflection angle obtainable from the beam deflector, it may be easier to optically design a compensation lens for scanning light at equal intervals.

Third, by enlarging the maximum deflection angle obtainable from the beam deflector, an image forming apparatus employing the light scanning unit can be manufactured with reduced size.

According to the present invention there is provided an apparatus and method as set forth in the appended claims. Other features of the invention will be apparent from the dependent claims, and the description which follows. For a better understanding of the invention, and to show how embodiments of the same may be carried into effect, reference will now be made, by way of example, to the accompanying diagrammatic drawings in which:

Various features and advantages of the disclosure will become more apparent by the following detailed description of several embodiments thereof with reference to the attached drawings, of which:

FIG. 1 illustrates an optical configuration of a light scanning unit according to an embodiment of the present invention;

FIG. 2 is a schematic perspective view of a torsion oscillator according to an embodiment of the present invention, which may be used in the light scanning unit of FIG. 1;

FIG. 3 illustrates an optical configuration and an optical path when a torsion oscillator is at an original position, according to an embodiment of the present invention;

FIG. 4 illustrates an optical configuration and an optical path when a torsion oscillator rotates counterclockwise from the original position, according to an embodiment of the present invention;

FIG. 5 illustrates an optical configuration and an optical path when a torsion oscillator rotates clockwise from the original position, according to an embodiment of the present invention;

FIG. 6 is a graph of a compensation quantity for distortion of a sinusoidal compensation lens with respect to a deflection angle of a torsion oscillator;

FIG. 7 illustrates an optical configuration of a light scanning unit, according to another embodiment of the present invention;

FIG. 8 illustrates a light source unit according to an embodiment of the present invention, which may be used in the light scanning unit of FIG. 7; and

FIGS. 9 through 11 illustrate an operation of the light scanning unit of FIG. 7, according to an embodiment of the present invention.

Reference will now be made in detail to embodiments of the present invention, examples of which are illustrated in the accompanying drawings, wherein like reference numerals refer to like elements. While the embodiments are described with detailed construction and elements to assist in a comprehensive understanding of the various applications and advantages of the embodiments, it should be apparent however that the embodiments can be carried out without those specifically detailed particulars. Also, well-known functions or constructions will not be described in detail so as to avoid obscuring the description with unnecessary detail. It should be also noted that in the drawings, the dimensions of the features are not intended to be to true scale, and may be exaggerated for the sake of enabling greater understanding.

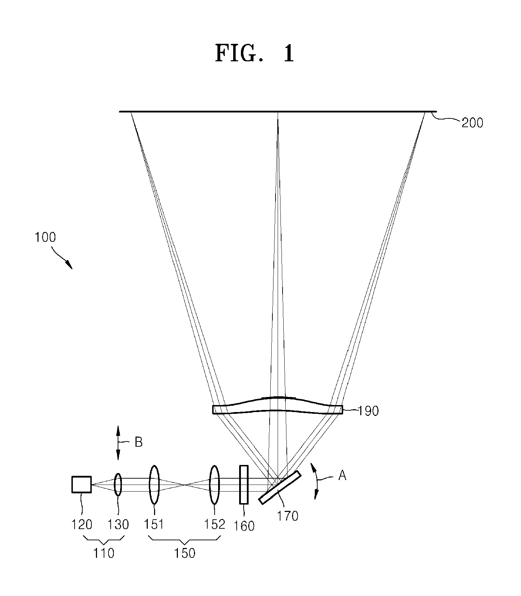

FIG. 1 illustrates an optical configuration of a light scanning unit 100 according to an embodiment of the present invention.

Referring to FIG. 1, the light scanning unit 100 may include a light source unit 110 emitting a collimated light beam, an incident angle compensation lens 150 compensating for a field angle of the collimated light beam, a cylindrical lens 160 focusing the collimated light beam in a sub-scanning direction, and a torsion oscillator 170 that deflects and scans the collimated light beam.

The light source unit 110 may include a light source 120 and a collimation lens 130.

The light source 120 may be, e.g., a semiconductor laser diode emitting a laser beam.

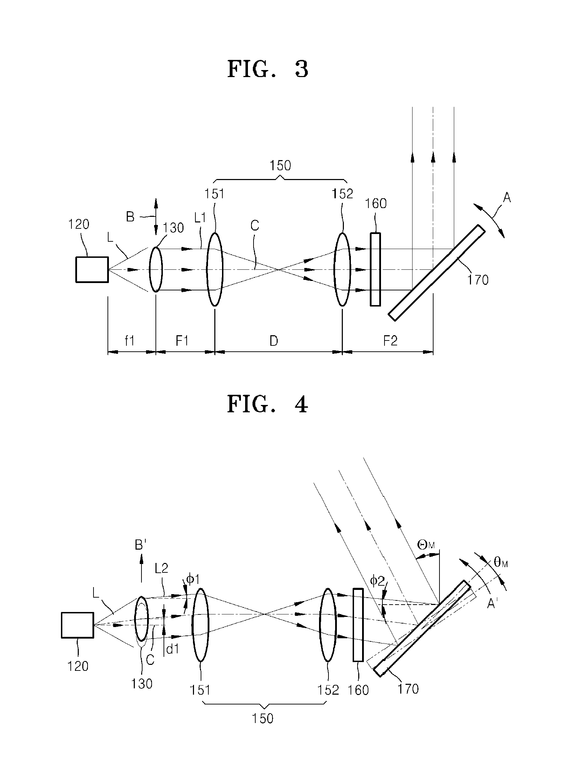

The collimation lens 130 collimates the light beam emitted from the light source 120. The focal point location at a light-receiving surface of the collimation lens 130 may be positioned at the origin of the light source 120 as illustrated in FIG. 3. In FIG. 3, the focal length of the collimation lens 130 is indicated by "f1." According to an embodiment, the collimation lens 130 may be driven to oscillate in synchronization with oscillation "A" of the torsion oscillator 170. Oscillation "B" of the collimation lens 130 may be achieved by, e.g., using an actuator using electromagnetic force.

The oscillation "B" of the collimation lens 130 may be created in a perpendicular direction to an optical path of the collimated light beam. Due to the oscillation "B" of the collimation lens 130, the collimated light beam that is incident on the torsion oscillator 170 oscillates synchronously with the oscillation "A" of the torsion oscillator 170, and the incident angle of the collimated light beam is accordingly changed, thereby enlarging the deflection angle of the torsion oscillator 170, as will be described in more detail later. The oscillation "B" of the collimation lens 130 will be described in more detail with reference to FIGS. 3 through 5.

Since the angle of optical path of the collimated light beam is changed due to the oscillation "B" of the collimation lens 130, the incident angle compensation lens 150 compensates for the change in the angle of optical path of the collimated light beam so that the oscillating collimated light beam proceeds towards the center of a mirror surface of the torsion oscillator 170. According to an embodiment, the incident angle compensation lens 150 may include at least two lenses, for example, first and second part lenses 151 and 152 constituting a 4F system. Referring to FIG. 3, the focal point location of the first part lens 151 at a light-receiving side is positioned at an origin of the collimation lens 130 at which a field is generated, that is, a field-generating origin of the light source unit 110. In addition, a focal point location of the second part lens 152 at a light emitting side is positioned at the center of the mirror surface of the torsion oscillator 170. The focal length of the first part lens 151 is indicated by "F1", and the focal length of the second part lens 152 is indicated by "F2". The interval "D" between the first and second part lenses 151 and 152 may preferably be a value equal to or smaller than the sum of the focal lengths of the first and second part lenses 151 and 152. The incident angle compensation lens 150 constituting the 4F system transfers an image (i.e., a light beam) from the collimation lens 130 to the mirror surface of the torsion oscillator 170. The size of the image may be changed according to the ratio of F1/F2. While, in this embodiment, in order to minimize the size of the torsion oscillator 170, the incident angle compensation lens 150 is preferably provided, the incident angle compensation lens 150 however is not essential, and may be omitted in other embodiments.

The oscillation "B" of the light source unit 110 or refraction of the incident angle compensation lens 150 affects the scanning direction of the torsion oscillator 170. The optical path variation of a light beam that is scanned by the torsion oscillator 170 due to the oscillation "B" of the light source unit 110 and the refraction of the incident angle compensation lens 150 may take place along the scanning plane, along which the light beam from the torsion oscillator 170 is scanned. FIGS. 1 and 3 through 5 each illustrate an optical configuration on the scanning plane.

The cylindrical lens 160 has refractive power in the sub-scanning direction so that the collimated light beam is focused on the mirror surface of the torsion oscillator 170 in the sub-scanning direction. The sub-scanning direction refers to a direction perpendicular to the scanning direction of the torsion oscillator 170, i.e., the direction perpendicular to the scanning plane. Since the cylindrical lens 160 does not have refractive power with regard to the scanning direction of the oscillator 170, the cylindrical lens 160 does not affect the optical path variation of the collimated light beam on the scanning plane resulting from the oscillation "B" of the light source unit 110 and the refraction of the incident angle compensation lens 150. While shown and described, the cylindrical lens 160 is not an essential element in practicing the embodiment, and may be omitted. Moreover, the cylindrical lens 160 is an optical element that is typically utilized in an image forming apparatus such as a printer, and is well known to those skilled in the art, the detailed description thereof is not necessary.

The torsion oscillator 170 deflects and scans the collimated light beam, and is an example of a beam deflector.

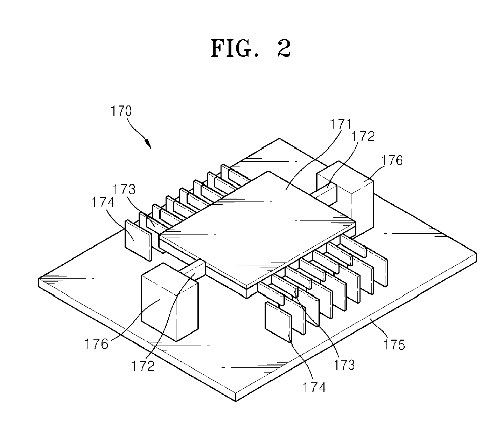

FIG. 2 illustrates a torsion oscillator 170 according to an embodiment of the present invention. Referring to FIG. 2, the torsion oscillator 170 may include a mirror 171 suspended above a substrate 175, a support 176 supporting either end of the mirror 171, a torsion spring 172 connected between the mirror 171 and the support 176 to support a seesaw-like motion of the mirror 171, a plurality of movable comb electrodes 173 which are formed on both side surfaces of the mirror 171 to extend perpendicularly from the side surfaces of the mirror 171, and a plurality of fixed comb electrodes 174 which are formed on the substrate 175 in a perpendicular direction to the substrate 175. The movable comb electrodes 173 and the fixed comb electrodes 174 are alternately disposed. The torsion oscillator 170 inclines the mirror 171 to one side via an electrostatic force between the movable comb electrodes 173 and the fixed comb electrodes 174, and restores the mirror 171 back to an original position by using a restoring force that is generated by a modulus of elasticity of the torsion spring 172. Consequently, the mirror 171 oscillates due to the torsion, thereby creating sinusoidal oscillation. While in the present embodiment, the torsion oscillator 170 is described as an example of a beam deflector, the present invention however is not limited thereto. Other beam reflectors may be used in alternative embodiments to enhance the maximum deflection angle of the beam deflector being utilized.

An oscillation frequency of the torsion oscillator 170 is related to the size of the mirror 171. The oscillation frequency of the torsion oscillator 170 is reduced as the size of the mirror 171 is increased. When the light scanning unit 100 is used in an image forming apparatus such as a printer that requires fast printing, the size of the mirror 171 may be minimized to realize a high oscillation frequency. To achieve this, in the present embodiment, the incident angle compensation lens 150 may be provided. The incident angle compensation lens 150 compensates for the angle of the path of the oscillating collimated light beam so that the oscillating collimated light beam proceeds towards the center of the mirror 171 of the torsion oscillator 170, thereby allowing the size of the mirror 171 to be reduced. In addition, as there may be a limit to which the oscillation angle of the torsion oscillator 170 may be increased, the collimation lens 130 may be made to oscillate synchronously with the oscillation "A" of the torsion oscillator 170. Thus, it may be possible to obtain a deflection angle that is equal to or greater than the oscillating angle of the torsion oscillator 170.

A focusing optical element 190 is an optical lens that focuses a light beam deflected by the torsion oscillator 170 onto an exposed surface 200. In the present embodiment, the torsion oscillator 170 is used as a beam deflector. In this regard, the light beam deflected by the torsion oscillator 170 traces a sinusoidal trajectory. Accordingly, the focusing optical element 190 may be a sinusoidal trajectory compensation lens, i.e., an arc-sinusoidal lens that compensates for the light beam deflected by the torsion oscillator 170 into a light beam having an arc-sinusoidal form so that the deflected light beam is scanned onto the exposed surface 200 at equal intervals. An example of an arc-sinusoidal lens is disclosed, e.g., in U.S. Patent No. 7,184,187 to Cannon et al., which is incorporated herein by reference in its entirety. As an arc-sinusoidal lens is well known to those skilled in the art, its detailed description herein is unnecessary, and thus will be omitted.

The operation of light scanning unit according to an embodiment will now be described with reference to FIGS. 3 through 5.

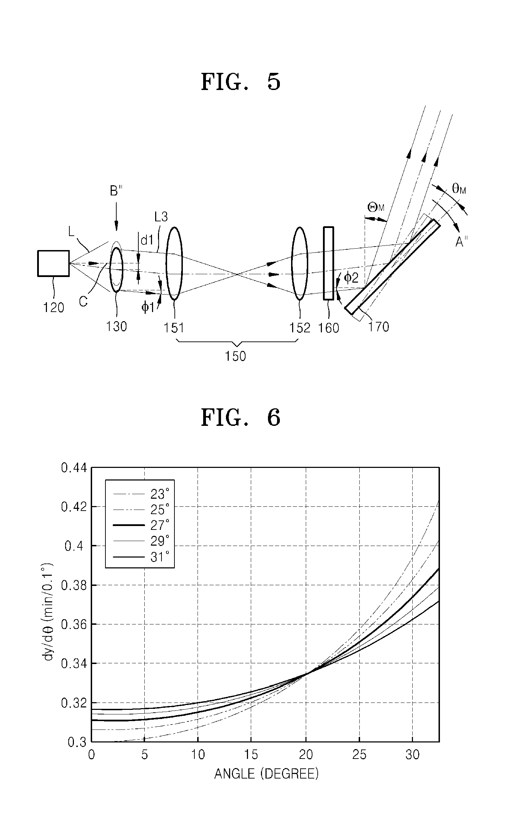

FIG. 3 illustrates the case where a torsion oscillator 170 is at its original position. FIG. 4 illustrates the case where the torsion oscillator 170 rotates counterclockwise from the original position. FIG. 5 illustrates the case where the torsion oscillator 170 rotates clockwise from the original position.

Referring to FIG. 3, the torsion oscillator 170 and the collimation lens 130 are at their original positions, e.g., at the center position within the range of oscillation. A light beam "L" emitted from a light source 120 is transmitted through the collimation lens 130 at its original position, collimated into a light beam "L1", transmitted through the incident angle compensation lens 150, and is reflected by the torsion oscillator 170. At this time, a path of the light beam "L1" from the collimation lens 130 to the torsion oscillator 170 is parallel to an optical axis "C" of the incident angle compensation lens 150, e.g., the first and second part lenses 151 and 152.

Referring to FIG. 4, as the torsion oscillator 170 rotates counterclockwise (A'), the collimation lens 130 moves in synchronization with the torsion oscillator 170 so that the collimation lens 130 oscillates upwards by a distance "d1." In FIG. 4, the torsion oscillator 170 as indicated by the dotted lines represents the torsion oscillator 170 being at the original position. As the collimation lens 130 moves upwards, the light beam "L" incident on the collimation lens 130 is collimated into a light beam "L2" that proceeds upwards so as to be inclined with respect to the optical axis "C" at a first field angle "φ1". The first field angle "φ1" is approximately given by Equation 1 below, where "f1" is the focal length of the collimation lens 130 and "d1" is the amount of oscillation of the collimation lens 130.

$$\phi 1 = \tan^{-1} \frac{d1}{f1} \tag{1}$$

The light beam "L2" that is collimated into the light beam directed in the inclined direction is transmitted through the incident angle compensation lens 150 towards the torsion oscillator 170. As previously described, the first and second part lenses 151 and 152 included in the incident angle compensation lens 150 may constitute a 4F system, and transfer the light beam from the collimation lens 130 to the mirror surface of the torsion oscillator 170. In the meantime, the collimated light beam "L2" transmitted through the incident angle compensation lens 150 travels in the direction towards the center of the mirror 171 of the torsion oscillator 170. The second field angle "φ2" of the light beam incident on the torsion oscillator 170 may be changed according to the ratio of F1/F2 of the first and second part lenses 151 and 152, and is approximately given by Equation 2 below.

$$\phi 2 = \phi 1 \times \frac{F1}{F2} \tag{2}$$

The light beam "L2" incident on the torsion oscillator 170 at the second field angle "φ2" is reflected while being deflected at an angle equal to or greater than the oscillating angle of the torsion oscillator 170. The maximum deflection angle "$\Theta_M$" of the light beam "L2" that is deflected on the torsion oscillator 170, whose the maximum oscillating angle is $\theta_M$, is given by Equation 3 below.

$$\Theta_M = 2\theta_M + \phi 2 = 2\theta_M + \phi 1 \times \frac{F1}{F2} \tag{3}$$

In Equation 3, the maximum deflection angle $\Theta_M$ refers to a deflection angle of the case where the mirror 171 (see FIG. 2) of the torsion oscillator 170 oscillates from an original position to one side, and thus a total deflection angle with regard to both right and left oscillations is twice as much as $\Theta_M$.

Referring to FIG. 5, as the torsion oscillator 170 rotates clockwise (A"), the collimation lens 130 oscillates downwards synchronously with the torsion oscillator 170 by a distance "d1" (B"). In FIG. 5, the torsion oscillator 170 indicted by the dotted lines represents the torsion oscillator 170 being at the original position. As the collimation lens 130 moves downwards, the light beam "L" incident on the collimation lens 130 is collimated into a light beam "L3" that travels downwards so as to be inclined with respect to the optical axis "C" at a first field angle "$\varphi1$" The first field angle "$\varphi1$" is given by Equation 1 above. The light beam "L3" that is collimated into a parallel light beam inclined downwards is transmitted through the incident angle compensation lens 150 towards the torsion oscillator 170. The collimated light beam "L3" transmitted through the incident angle compensation lens 150 travels in a convergent direction towards the center of the mirror 171 of the torsion oscillator 170. The second field angle "$\varphi2$" of the light beam incident on the torsion oscillator 170 is given by Equation 2 above. The maximum deflection angle "$\Theta_M$" with respect to the maximum oscillating angle "$\theta_M$" of the torsion oscillator 170 is given by Equation 3 above.

The mirror 171 of the torsion oscillator 170 creates sinusoidal oscillation. In this regard, a light beam that oscillates and that is reflected off the torsion oscillator 170 oscillates at an angle "$\Theta$" that is given by Equation 4 below.

$$\Theta = 2\theta_M \sin(\omega t) + \phi 2 \times \sin(\omega t) = \left(2\theta_M + \phi 1 \times \frac{F1}{F2}\right) \sin(\omega t) \tag{4}$$

The angle "$\Theta$" above is a deflection angle in the case where the mirror 171 is inclined in one direction with respect to its original position.

As described with reference to FIGS. 3 through 5, the collimation lens 130 oscillates in synchronization with the oscillation of the torsion oscillator 170, and thus, the maximum deflection angle "$\Theta_M$" with regard to the torsion oscillator 170 is the sum of the maximum oscillating angle "$\theta_M$" of the torsion oscillator 170 and $\varphi1*F1/F2$, thereby increasing a total deflection angle by $2*\varphi1*F1/F2$.

FIG. 6 is a graph of a compensation quantity "dy/d$\theta$" for distortion of a sinusoidal compensation lens with respect to a deflection angle of the torsion oscillator 170, according to an embodiment of the present invention. For example, assuming that an oscillating angle of the torsion oscillator is 23°, a focal length "f" of a collimation lens is 10 mm, the oscillating distance "d1" of the collimating lens 130 is 0.4 mm, and F1/F2 of the incident angle compensation lens 150, that is, the first and second part lenses 151 and 152 is 1, then, $\varphi1 = \varphi2 = 2.3°$. The sum of $\varphi1$ and $\varphi2$ represents the increase of 4.6° of the deflection angle from the oscillating angle of the torsion oscillator. Referring to FIG. 6, it can be seen that the amount of compensation "dy/d$\theta$" for distortion of the sinusoidal compensation lens is reduced as the deflection angle of the torsion oscillator 170 is increased. As the amount of compensation "dy/d$\theta$" is reduced, it may become easier to design the sinusoidal compensation lens.

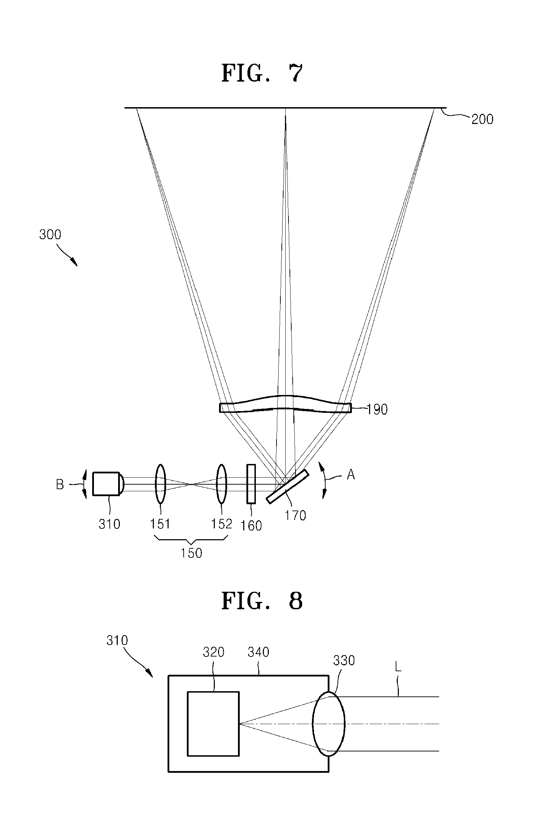

FIG. 7 illustrates an optical configuration of a light scanning unit 300 according to another embodiment of the present invention.

Referring to FIG. 7, the light scanning unit 300 includes a light source unit 310 emitting a collimated light beam, an incident angle compensation lens 150 compensating for a field angle of the collimated light beam, a cylindrical lens 160 focusing the collimated light beam in the sub-scanning direction and a torsion oscillator 170 that deflects and scans the collimated light. Referring to FIG. 8, the light source unit 310 includes a light source 320, a collimation lens 330 collimating the light beam emitted from the light source 320, and a holder 340 integrally supporting both the light source 320 and the collimation lens 330. The light source unit 310 may be manufactured as an integrated structure, and changes the direction of a light beam that is collimated due to a tilt angle of the light source unit 310. The light source unit 310 having the integrated structure can be manufactured into a compact structure by using micro-electromechanical systems (MEMS) technology that has recently seen wide usage. For example, when the light source unit 310 is manufactured using MEMS technology, a semiconductor laser diode (e.g., an edge emitting type laser diode or a vertical cavity surface emitting laser (VCSEL)) may be used as the light source 320, and a micro lens may be used as the collimation lens 330.

Referring back to FIG. 7, the light source unit 310 may be driven to tilt-oscillate synchronously with the oscillation "A" of the torsion oscillator 170. The light source unit 310 having the integrated structure may be driven by an actuator using electromagnetic force. According to an embodiment, when the light source unit 310 is manufactured using MEMS technology, the light source unit 310 may be driven by static electricity similar to the manner in which the torsion oscillator 170 is driven. Tilt-oscillation "B" of the light source unit 310 is applied so that the collimated light beam that is incident on the torsion oscillator 170 oscillates synchronously with the oscillation of the torsion oscillator 170, and thus an incident angle at which the collimated light beam is incident on the torsion oscillator 170 is changed. In the present embodiment, since the light source unit 310 tilt-oscillates, the light source unit 310 can directly change the incident angle. Thus, it is easy to increase the change of the incident angle, and with the increased change of the incident angle, it is possible to enhance the enlargement of the deflection angle of the torsion oscillator 170.

The incident angle compensation lens 150 compensates for the angle of path of the collimated light beam so that the oscillating collimated light beam travels towards the center of a mirror surface of the torsion oscillator 170. The cylindrical lens 160 is applied so that the collimated light beam is focused on the mirror surface of the torsion oscillator 170 in the sub-scanning direction. The torsion oscillator 170 deflects and scans the collimated light beam. The focusing optical element 190 focuses the light beam that is deflected from the torsion oscillator 170 onto the exposed surface 200. In the present embodiment, the optical configuration is the same as that in FIG. 1 except for the light source unit 310, and thus the descriptions of those elements common to both embodiments will not be repeated.

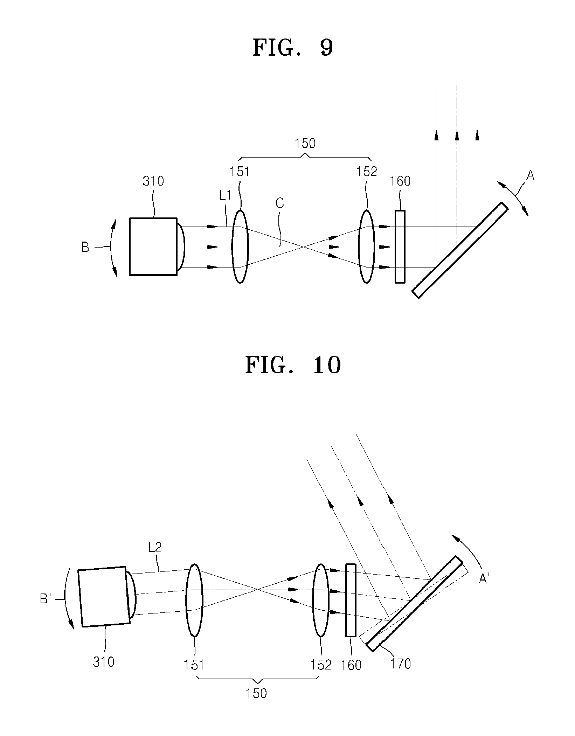

Next, the operation of the light scanning unit of FIG. 7 will be described with reference to FIGS. 9 through 11.

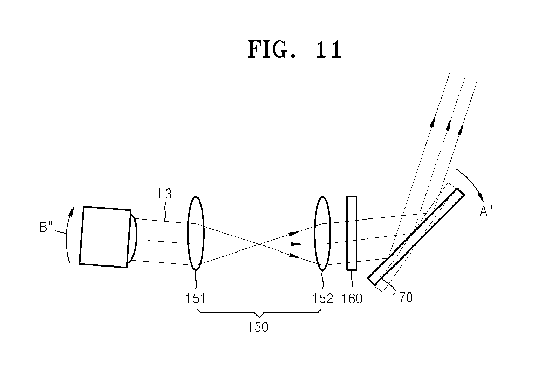

FIG. 9 illustrates the case where a torsion oscillator 170 is at its original position. FIG. 10 illustrates the case where the torsion oscillator 170 rotates counterclockwise from the original position. FIG. 11 illustrates the case where a torsion oscillator 170 rotates clockwise from the original position.

Referring to FIG. 9, the light source unit 310 and the torsion oscillator 170 are at their respective original positions, that is, the center position within the range of oscillation. A collimated light beam "L1" that from the light source unit 310 is transmitted through the incident angle compensation lens 150 to be incident on the torsion oscillator 170. In this configuration, the path of the collimated light beam "L1" is parallel to the optical axis "C" of the incident angle compensation lens 150.

Referring to FIG. 10, as the torsion oscillator 170 rotates counterclockwise (A') from the original position, the light source unit 310 synchronously therewith tilt-oscillate (B') upwards. In FIG. 10, the torsion oscillator 170 indicated by the dotted lines represents the torsion oscillator 170 being at the original position. A collimated light beam "L2" that travels at an upward incline from the light source unit 310, that is, in a divergent direction, is transmitted through the incident angle compensation lens 150 towards the torsion oscillator 170. The collimated light beam "L2" transmitted through the incident angle compensation lens 150 proceeds in a convergent direction towards the center of the mirror 171 of the torsion oscillator 170. The light beam "L2" incident on the torsion oscillator 170 at an incline is deflected at an angle equal to or greater than the oscillating angle of the torsion oscillator 170, and is reflected off the torsion oscillator 170. The maximum deflection angle "$\Theta_M$" of the light beam "L2" that is deflected by the torsion oscillator 170 is given by Equation 3 above.

Referring to FIG. 11, as the torsion oscillator 170 rotates clockwise (A") from the original position, the light source unit 310 synchronously therewith tilt-oscillate downward. In FIG. 11, the torsion oscillator 170 indicated by the dotted lines represents the torsion oscillator 170 being at the original position. The collimated light beam "L3" that is emitted downwards from the light source unit 310 is transmitted through the incident angle compensation lens 150 in a direction towards the torsion oscillator 170 along the optical axis "C". The collimated light beam "L3" transmitted through the incident angle compensation lens 150 proceeds in a convergent direction towards the center of the mirror 171 of the torsion oscillator 170. The collimated light beam "L3" incident on the torsion oscillator 170 with the upward incline is deflected at an angle that is equal to or greater than the oscillating angle of the torsion oscillator 170, and is reflected off the torsion oscillator 170. The maximum deflection angle "$\Theta_M$" with respect to the maximum oscillating angle "$\theta_M$" is given by Equation 3 above.

As the mirror 171 of the torsion oscillator 170 creates sinusoidal oscillation, the light beam reflected off the torsion oscillator 170 oscillates at an angle "$\Theta$" that is given by Equation 4 above.

Referring to FIG. 1 or FIG. 7, the light scanning unit 100 or 300 may be used in an image forming apparatus, such as a duplicator, a printer, a facsimile, or the like, that utilizes electrophotograph in realizing an image on a printing paper. For example, the exposed surface 200 may be a photosensitive medium such as a photoreceptor drum. In this case, the exposed surface 200 is moved in a direction, and an electrostatic latent image is formed on the exposed surface 200 by a light beam scanned by the light scanning unit 100 or 300. The electrostatic latent image formed on the exposed surface 200 may be developed into a visible image by toner provided by a developer unit (not shown).

Furthermore, the light scanning unit 100 or 300 may be used in an image forming apparatus such as a laser display apparatus on which a laser beam is scanned on a screen so as to display an image on the screen. In this case, the exposed surface 200 may be a screen, and the light scanning unit 100 or 300 may be used for horizontal-scanning or vertical-scanning.

In the image forming apparatus according to the embodiments herein described, a deflection angle can be enlarged by employing the light scanning unit 100 or 300. Thus, the design of a sinusoidal compensation lens may be easier, and the distance between the light scanning unit 100 or 300 and the exposed surface 200 can be reduced, thereby obtaining a compact and slim structure.

Since other aspects of an image forming apparatus is well known to those having ordinary skill in the art, detailed description thereof herein is not necessary.

While a light scanning unit, an image forming apparatus employing the light scanning unit and a light scanning method have been particularly shown and described with reference to exemplary embodiments thereof, it will be understood by one of ordinary skill in the art that various changes in form and details may be made therein without departing from the scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A light scanning unit (100), comprising:

   a light source unit (110) configured to emit a collimated light beam; and
   a beam deflector (170) for deflecting the collimated light beam, the beam deflector including a mirror surface configured to oscillate,

   wherein the collimated light beam emittable by the light source is arranged to be incident on the beam deflector with an incident angle that changes in synchronization with the oscillation of the mirror surface.

2. The light scanning unit of claim 1, wherein the light source unit comprises a light source and a collimation lens (130) for collimating a light beam receivable from the light source, the collimation lens being configured to oscillate synchronously with the oscillation of the mirror surface.

3. The light scanning unit of claim 2, wherein the collimation lens is arranged to oscillate in a direction substantially perpendicular to an optical path of the light beam when transmitted through the collimation lens.

4. The light scanning unit of any preceding claim, wherein the light source unit comprises a light source, a collimation lens for collimating a light beam emittable from the light source and a holder integrally supporting both the light source and the collimation lens, the light source unit being configured to oscillate synchronously with the oscillation of the mirror surface.

5. The light scanning unit as claimed in any preceding claim, wherein at least a portion of the light source unit is configured to move within a range of movement, the mirror surface of the beam deflector is arranged to oscillate within a range of oscillation to deflect the collimated light beam when incident thereupon over a range of deflection angles having a maximum value $\Theta_M$ that satisfies:

$$\Theta_M = 2\theta_M + \varphi_2,$$

wherein $\theta_M$ represents an angle between the mirror surface at midpoint of the range of oscillation and the mirror surface at an upper limit of the range of oscillation, $\varphi_2$ representing the difference between a first angle of incidence at which the collimated light beam is controllable to be incident on the mirror surface when the at least a portion of the light source unit is at midpoint of the range of movement and a second angle of incidence at which the collimated light beam is controllable to be incident on the mirror surface when the at least a portion of the light source unit is at upper limit of the range of movement.

**6.** The light scanning unit of claim 5, further comprising:

an incident angle compensation lens disposed between the light source unit and the beam deflector, the incident angle compensation lens including a first part lens and a second part lens, the first part lens being arranged to have its focal point positioned at a field-generating origin of the light source unit, the second part lens being arranged to have its focal point positioned at the center of the mirror surface of the beam deflector, wherein the maximum value $\Theta_M$ satisfies:

$$\Theta_M = 2\theta_M + \varphi_1 \times F1/F2,$$

wherein $\varphi_1$ represents a difference between a first emission angle of the collimated light beam when emitted from the light source unit when the at least a portion of the light source unit is at midpoint of the range of movement and a second emission angle of the collimated light beam when emitted from the light source unit when the at least a portion of the light source unit is at upper limit of the range of movement, F1/F2 representing a ratio of respective focal lengths of the first part lens and the second part lens.

**7.** The light scanning unit as claimed in any preceding claim, wherein the beam deflector comprises a torsion oscillator including the mirror surface configured to oscillate to create a sinusoidal oscillation and a torsion support supporting the mirror surface.

**8.** The light scanning unit of any preceding claim, further comprising:

a focusing optical element including a sinusoidal trajectory compensation lens arranged to perform an arc-sinusoidal shaping of the collimated light beam deflected by the beam deflector to scan the light beam deflected by the beam deflector across the scanning direction at equal intervals.

**9.** The light scanning unit as claimed in any preceding claim, further comprising an incident angle compensation lens for compensating an angle of travel path of the collimated light beam so that the collimated light beam is directable towards the center of the mirror surface of the beam deflector.

**10.** The light scanning unit of claim 9, wherein the incident angle compensation lens comprises a first part lens and a second part lens, the first part lens being arranged to have its focal point positioned at a field-generating origin of the light source unit, the second part lens being arranged to have its focal point positioned at the center of the mirror surface of the beam deflector.

**11.** The light scanning unit of claim 10, wherein a distance between the first part lens and the second part lens is equal to or smaller than the sum of the focal lengths of the first and second part lenses.

**12.** An image forming apparatus, comprising:

the light scanning unit as claimed in any preceding claim; and
an exposed surface on which a light beam scannable by the light scanning unit is controllable to the incident.

**13.** A light scanning method, comprising:

emitting a collimated light beam from a light source unit; and
oscillating a beam deflector to scan the collimated light beam from the light source onto an exposed surface,

wherein the emitting of the collimated light beam comprises oscillating a path of the collimated light beam from the light source in synchronization with the oscillation of the beam deflector so that an angle of travel path of the collimated light beam from the light source changes synchronously with the oscillation of the beam deflector.

**14.** The method of claim 13, further comprising:

compensating for the change of the angle of travel path of the collimated light beam so that the collimated light beam travels towards the center of the beam deflector.

**15.** The method of claim 13 or 14, wherein a deflected light beam deflected by the beam deflector has a sinusoidal trajectory.

FIG. 1

FIG. 2

## FIG. 3

## FIG. 4

# FIG. 5

# FIG. 6

## FIG. 7

## FIG. 8

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080031713

- US 7184187 B, Cannon